# EUROPÄISCHE PATENTSCHRIFT

(11) **EP 0 983 911 B1**
(45) Veröffentlichungstag und Bekanntmachung des Hinweises auf die Patenterteilung: **21.01.2004**
(21) Anmeldenummer: 99114819.8
(22) Anmeldetag: 29.07.1999
(51) Int. Cl.: B60R 21/09

(54) **Vorbaustruktur für ein Kraftfahrzeug**
Front structure for a motor vehicle
Structure avant pour un véhicule automobile

(30) Priorität: 29.08.1998 DE 19839521
(43) Veröffentlichungstag der Anmeldung: 08.03.2000
(73) Patentinhaber: DaimlerChrysler AG, 70567 Stuttgart (DE)
(72) Erfinder: Adams, Frank, 71083 Herrenberg (DE); Benz, Eberhard, 71117 Gärtringen (DE); Herre, Joachim, 71120 Grafenau (DE); Sailer, Josef, 72401 Haigerloch (DE); Schnabel, Alfred, 75382 Althengstett (DE)

(56) Entgegenhaltungen:
- EP-A- 0 836 968
- EP-A- 0 904 990
- DE-A- 2 841 988
- DE-A- 4 335 511
- DE-A- 4 415 642

## Beschreibung

Die Erfindung betrifft eine Vorbaustruktur für ein Kraftfahrzeug mit einer einen Fahrgastraum von einem Vorbauraum trennenden Stirnwand, an der ein Bremsgerät festgelegt ist, an das ein in einen Fußraum des Fahrgastraumes hineinragendes Bremspedal angeschlossen ist, sowie mit vorbauseitigen Rohbaukarosserieteilen und mit Mitteln zur Verschwenkung des Bremspedales und des Bremsgerätes bei einem Fahrzeugaufprall in Fahrtrichtung nach vorne.

Die DE 44 15 642 A1 offenbart eine Stirnwand einer Vorbaustruktur eines Kraftfahrzeugs, die einen Fahrgastraum von einem Vorbauraum trennt. An der Stirnwand ist auf Höhe eines Lagerbockes für eine Pedalanordnung ein Bremsgerät angeordnet, wobei der Lagerbock in einen Fußraum des Fahrgastraumes hineinragt. Die Stirnwand ist mit einem Sollknickbereich versehen, der derart relativ zu dem Lagerbock für die Pedalanordnung sowie relativ zu dem Bremsgerät angeordnet ist, daß bei einem Frontalaufprall und einer entsprechenden Verformung der Stirnwand eine Schwenkbewegung des Lagerbockes erzielt wird, die eine Vorbewegung der Pedalanordnung in Fahrtrichtung nach vorne und damit aus dem Fußraum heraus zur Stirnwand hin erzeugt. Gleichzeitig wird auch das Bremsgerät selbst mit verschwenkt.

Aus der DE 196 01 800 A1 ist eine Sicherheitseinrichtung für eine Pedalanordnung vorgesehen, die mittels eines Lagerbockes an einer Stirnwand eines Kraftfahrzeugs befestigt ist. Innerhalb der Fahrgastzelle ist vor dem Lagerbock in einem definierten Abstand zur Stirnwand ein Querträger angeordnet, der auf Höhe des Anlenkpunktes der Pedalanordnung verläuft. Dieser Querträger hält die Pedalanordnung bei einer Stirnwandintrusion relativ zu dem Fahrer des Kraftfahrzeugs auf Abstand.

Die DE 197 57 832 A1 weist eine Pedalanordnung an einer Stirnwand eines Kraftfahrzeugs auf. Die Lagerung der Pedalanordnung ist mit einer Anschlagfläche versehen, die mit einem korrespondierenden Anschlag an einem Cockpitquerträger zusammenwirkt. Diese Kombination erzeugt bei einem Frontalaufprall und einer entsprechenden Stirnwandintrusion eine Vertikalbewegung der Pedalanordnung nach oben, so daß die Pedalanordnung teilweise aus dem verbleibenden Fußraum des Fahrgastraumes herausbewegt wird.

Eine Vorbaustruktur für ein Kraftfahrzeug ist aus der den Oberbegriff des Anpruch 1 offenbarenden DE 28 41 988 C2 bekannt. Die Vorbaustruktur ist Teil einer selbsttragenden Rohbaukarosserie eines Personenkraftwagens. Um bei einem Fahrzeugaufprall und einer daraus resultierenden Vorbaudeformation Verletzungen im Fußbereich eines Fahrers durch die Bremspedalanordnung zu vermeiden, wird das Bremspedal durch eine verschwenkung des zugehörigen Bremsgerätes bei einer entsprechenden Vorbaudeformation aus dem Fußraum heraus in Fahrzeuglängsrichtung nach vorne bewegt. Hierzu ist das das Bremspedal tragende Bremsgerät mittels eines eigenen Trägerteiles gehalten, wobei das Trägerteil sich zwischen einem Vorbaulängsträger und einem Windschutzquerträger erstreckt. Das Bremsgerät ist derart an dem Trägerteil festgelegt, daß sowohl Bremskraftverstärker als auch Hauptbremszylinder in Fahrtrichtung vor diesem Trägerteil angeordnet sind. Aus der DE 30 18 732 C2 ist eine weitere Vorbaustruktur für einen Personenkraftwagen bekannt, bei der ein Bremsgerät in ähnlicher Weise an einem Trägerteil gehalten ist, das mit einer Stirnwand der Rohbaukarosserie verbunden ist.

Aufgabe der Erfindung ist es, eine Vorbaustruktur der eingangs genannten Art zu schaffen, mittels der die Verletzungsgefahr für einen Fahrer eines Kraftfahrzeugs im Fußbereich bei einem Fahrzeugaufprall,mit einfachen Mitteln reduzierbar ist.

Diese Aufgabe wird durch die Merkmale des Anspruch 1 gelöst, wobei einem in Fahrtrichtung vorderen Stirnbereich des Bremsgerätes wenigstens ein mechanisches Zwangsführungsmittel zugeordnet ist, das an wenigstens einem Rohbaukarosserieteil festgelegt ist und bei einem Fahrzeugaufprall wenigstens mit einer Bewegungskomponente in Fahrzeughochrichtung von unten nach oben an dem Stirnbereich des Bremsgerätes angreift, die eine Kippbewegung des Bremsgerätes erzeugt. Vorzugsweise erfolgt die Kippbewegung um eine quer zur Fahrtrichtung verlaufende Drehachse im Bereich der Stirnwand. Durch die erfindungsgemäße Lösung wird im Gegensatz zum Stand der Technik kein zusätzliches Trägerteil benötigt, mit dem das Bremsgerät an der Stirnwand festgelegt ist. Das Bremsgerät gemäß der Erfindung bleibt vielmehr in seiner üblichen Befestigungsposition an der Stirnwand und wird lediglich zusätzlich im vorderen Stirnbereich, vorzugsweise im Bereich eines Hauptbremszylinders, durch das Zwangsführungsmittel belastet. Dadurch, daß das Zwangsführungsmittel im vorderen Stirnbereich des Bremsgerätes angreift, nimmt das Bremsgerät bereits frühzeitig an einer Deformation der Vorbaustruktur durch eine entsprechende Kippbewegung teil. Die Erfindung geht-von der Erkenntnis aus, daß entsprechende Rohbaukarosserieteile der Vorbaustruktur, insbesondere ein Obergurt des fahrerseitigen Vorbaulängsträgers sowie eine Federbeinkonsole auf der Fahrerseite, neben einer Deformationsbewegung nach hinten auch eine Deformationskomponente nach oben in Fahrzeughochrichtung erfahren. Diese Erkenntnis nützt die erfindungsgemäße Lösung, indem der vordere Stirnbereich des Bremsgerätes, insbesondere ein Gehäuse des Hauptbremszylinders, durch das wenigstens eine mechanische Zwangsführungsmittel an diese Bewegungskomponente in Fahrzeughochrichtung formschlüssig angekoppelt wird. Durch die bereits frühzeitige Teilnahme an der Vorbaudeformation kann das Bremsgerät relativ große Schwenkwinkel zurücklegen, so daß ein zuverlässiges Herausschwenken des Bremspedales aus dem Fußraum nach vorne erzielt wird.

In Ausgestaltung der Erfindung ist das wenigstens eine Zwangsführungsmittel dem Stirnbereich des Bremsgerätes derart zugeordnet, daß es bei einer Rückverlagerung in Fahrzeuglängsrichtung während der Aufpralldeformation vom Bremsgerät entkoppelt wird. Dadurch wird verhindert, daß eine entsprechende Bewegungskomponente der sich deformierenden Rohbaukarosserieteile in Fahrzeuglängsrichtung nach hinten eine erneute Rückverlagerung des Bremspedales in den Fußraum hinein bewirkt. Da das Zwangsführungsmittel bei einer Rückverlagerung abgekoppelt wird, kann es keine Rückverlagerung des Bremsgerätes bewirken, so daß eine entsprechende Rückverlagerung des Bremsgerätes wirkungsvoll vermieden wird.

In weiterer Ausgestaltung der Erfindung ist als Zwangsführungsmittel an dem Rohbaukarosserieteil ein Stützarm angeordnet, der während einer Vorbaudeformation wenigstens zeitweise formschlüssig gegen einen Angriffspunkt des Bremsgerätes drückt. Dies ist eine besonders einfache und dennoch wirkungsvolle Ausgestaltung. Der Angriffspunkt kann an einem Gehäuse des Hauptbremszylinders oder an einem anderen Teil des Bremsgerätes, insbesondere am Bremskraftverstärker, vorgesehen sein.

In weiterer Ausgestaltung der Erfindung ist der Angriffspunkt durch ein Stützelement an dem Gehäuse des Hauptbremszylinders gebildet, das derart an dem Gehäuse positioniert ist, daß der Stützarm bei einer Bewegungskomponente der Vorbaudeformation in Fahrzeuglängsrichtung nach hinten an dem Stützelement ohne Aufbringung eines entsprechenden Drehmomentes auf das Bremsgerät abgleitet. Dadurch wird mit einfachen Mitteln verhindert, daß das Bremspedal durch ein Zusammenschieben der Vorbaustruktur in Fahrzeuglängsrichtung erneut in den Fußraum zurückgeschwenkt wird, indem eine Rückverschiebung des Bremsgerätes vermieden wird.

In weiterer Ausgestaltung der Erfindung ist der Stützarm mit einer ein Drehmoment auf das Bremsgerät entgegen der erzeugten Kippbewegung verhindernden Sollknickstelle versehen. Das Vorsehen einer Sollknickstelle ermöglicht es, den Stützarm bleibend mit dem Angriffspunkt am Gehäuse des Hauptbremszylinders zu verbinden. Denn trotz der aufrechterhaltenen Verbindung zwischen Rohbaukarosserieteil und Hauptbremszylinder durch den Stützarm kann der Stützarm durch die entsprechend gestaltete Sollknickstelle bei einer Vorbaudeformation in Fahrzeuglängsrichtung, die eine Zurückbewegung des Bremsgerätes bewirken würde, keine Kräfte mehr auf das Bremsgerät übertragen, so daß die Zurückbewegung des Bremsgerätes in gewünschter Weise verhindert wird.

In weiterer Ausgestaltung der Erfindung ist der Stützarm an dem Angriffspunkt mittels eines Abkopplungsmechanismus angelenkt, der ein Lösen des Stützarmes von dem Angriffspunkt bei einem beginnenden Drehmoment auf das Bremsgerät entgegen der erzeugten Kippbewegung bewirkt. Auch durch diese Ausgestaltung wird die ungewünschte Rückverschiebung des Bremspedales bei einer entsprechenden Vorbaudeformation verhindert. Der Abkopplungsmechanismus stellt eine lösbare Lagerung des Stützarmes an dem Stirnbereich des Bremsgerätes und damit an dem Gehäuse des Hauptbremszylinders dar, die Drehbewegungen und Verschiebungen des Bremsgerätes mitmacht und sich vorzugsweise durch Ausklinken von dem Bremsgerät löst, sobald es zu der Rückverschiebung des zugeordneten Rohbaukarosserieteiles in Fahrzeuglängsrichtung kommt, die eine ungewünschte Rückbewegung des Bremspedales in den Fußraum hinein bewirken würde.

Weitere Vorteile und Merkmale der Erfindung ergeben sich aus den Unteransprüchen. Nachfolgend sind bevorzugte Ausführungsbeispiele der Erfindung beschrieben und anhand der Zeichnungen dargestellt.
- Fig. 1: zeigt schematisch in einer Seitenansicht eine erste Ausführungsform einer erfindungsgemäßen Vorbaustruktur für einen Personenkraftwagen,
- Fig. 2: in einer Ansicht in Richtung des Pfeiles II in Fig. 1 einen Ausschnitt der Vorbaustruktur nach Fig. 1,
- Fig. 3: die Vorbaustruktur nach Fig. 1 in einer Momentanposition während einer durch einen Fahrzeugaufprall verursachten Vorbaudeformation,
- Fig. 4: die Endposition der Vorbaustruktur nach den Fig. 1 und 3 nach erfolgter Vorbaudeformation,
- Fig. 5: eine weitere Ausführungsform einer erfindungsgemäßen Vorbaustruktur in schematischer Seitenansicht,
- Fig. 6: die Vorbaustruktur nach Fig. 5 in einer teilweise deformierten Momentanposition,
- Fig. 7: die Vorbaustruktur nach den Fig. 5 und 6 in einer deformierten Endposition,
- Fig. 8: einen Ausschnitt einer weiteren Ausführungsform einer erfindungsgemäßen Vorbaustruktur in schematischer Seitenansicht,
- Fig. 9: die Vorbaustruktur nach Fig. 8 in teilweise deformierter Momentanposition und
- Fig. 10: die Vorbaustruktur nach den Fig. 8 und 9 in deformierter Endposition.

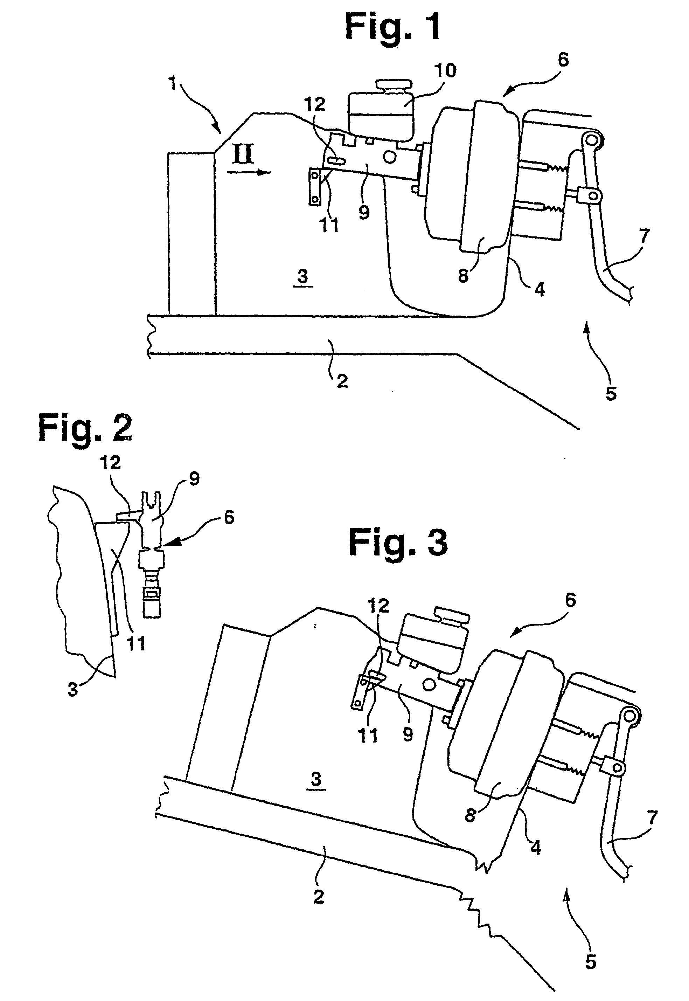

Ein Personenkraftwagen weist in grundsätzlich bekannter Weise eine in Fig. 1 nicht vollständig dargestellte Vorbaustruktur 1 auf, die als Rohbaukarosserieteile unter anderem zwei Vorbaulängsträger 2 sowie für jede Fahrzeugseite jeweils eine Federbeinkonsole 3 oder einen Radeinbau aufweist. Die Vorbaulängsträger 2 gehen in eine Stirnwand 4 über, die den Abschluß der Vorbaustruktur 1 zur Fahrgastzelle hin und zum Fahrzeuginnenraum hin bildet. In einem Fußraum 5 des Fahrzeuginnenraumes ragt in grundsätzlich bekannter Weise ein Bremspedal 7 hinein, das an ein Bremsgerät 6 gekoppelt ist. Das Bremsgerät 6 ist an der Stirnwand 4 festgelegt.

Die Vorbaustruktur 1 umgrenzt einen Vorbauraum, der bei Fahrzeugen mit Frontmotor einen Motorraum und bei Fahrzeugen mit Heckmotor oder bei Fahrzeugen mit Mittelmotor einen Koffer- oder Laderaum darstellt.

Das Bremsgerät 6 ist derart an der Stirnwand 4 festgelegt, daß ein Bremskraftverstärker 8 sich auf der dem Vorbauraum, d.h. dem Motorraum oder dem Koffer- oder Laderaum, zugewandten Seite der Stirnwand 4 befindet. In Fahrzeuglängsrichtung nach vorne schließt an den Bremskraftverstärker 8 ein Hauptbremszylinder 9 an, der ebenfalls Teil des Bremsgerätes 6 ist. Oberhalb des Hauptbremszylinders 9 kann in an sich bekannter Weise ein Druckmittelvorratsbehälter 10 angeordnet sein.

In einem vorderen Stirnbereich des Bremsgerätes 6, beim dargestellten Ausführungsbeispiel in einem vorderen Stirnbereich des Hauptbremszylinders 9 ist an einem Gehäuse des Hauptbremszylinders 9 ein als Angriffspunkt dienender, seitlich nach außen abragender Stützfortsatz 12 festgelegt, der einstückig am Gehäuse angeformt oder starr mit diesem verbunden sein kann. Der als Stützelement dienende Stützfortsatz 12 kann gegenüber dem horizontalen Vorbaulängsträger 2 geringfügig geneigt angeordnet sein. Dem Stützfortsatz 12 ist als Stützarm eine Stützkonsole 11 zugeordnet, die an der Federbeinkonsole 3 festgelegt ist.

Beim dargestellten Ausführungsbeispiel ist der Personenkraftwagen als Rechtslenker gestaltet. In gleicher Weise kann die erfindungsgemäße Vorbaustruktur jedoch auch für einen Linkslenker vorgesehen sein. In diesem Fall sind die entsprechenden Komponenten der Erfindung dann dem linken Vorbaulängsträger (in Fahrtrichtung gesehen) und/oder der linken Federbeinkonsole oder einem entsprechenden anderen Rohbaukarosserieteil zugeordnet.

Die Stützkonsole 11 ist von dem Stützfortsatz 12 beabstandet.

Bei einem Fahrzeugaufprall wird die Vorbaustruktur 1 derart deformiert, daß sich Vorbaulängsträger 2 und Federbeinkonsole 3 zum einen mit horizontaler Bewegungskomponente in Fahrzeuglängsrichtung nach hinten bewegen. Zum anderen kann die Vorbaustruktur 1, insbesondere die Vorbaulängsträger 2 und die Federbeinkonsole 3 eine Bewegungskomponente in Fahrzeughochrichtung (Fig. 3) erfahren, wodurch die Stützkonsole 11 an dem Stützfortsatz 12 zur Anlage gelangt und bei einer weiteren Deformation den Stützfortsatz 12 nach oben drückt. Die Wirkung der Stützkonsole 11 wird dadurch verstärkt. Da der Stützfortsatz 12 starr mit dem Gehäuse des Hauptbremszylinders 9 verbunden ist, wird gleichzeitig auch das gesamte Bremsgerät 6 unter Deformation des Befestigungsabschnittes an der Stirnwand 4 um die Befestigungsstelle an der Stirnwand 4 herum nach oben gedrückt. Das Bremsgerät 6 erfährt somit eine Kippbewegung. Die Kippbewegung erfolgt gemäß der Darstellung nach den Fig. 1, 3 und 4 im Uhrzeigersinn. Durch diese Kippbewegung des Bremsgerätes 6 wird das mit dem Bremsgerät 6 gekoppelte Bremspedal 7 aus dem Fußraum 5 heraus in Fahrtrichtung nach vorne bewegt, so daß Verletzungsgefahren für den Fußbereich des Fahrers reduziert werden.

Um zu vermeiden, daß eine weitere Stauchung der Vorbaustruktur in Fahrzeuglängsrichtung bei der Vorbaudeformation während des Fahrzeugaufpralls dazu führt, daß das Bremsgerät 6 einschließlich des Bremspedales 7 zum Fußraum 5 hin zurückverschoben wird, gleitet die Stützkonsole 11 ab einem bestimmten Schwenkwinkel des Bremsgerätes 6 relativ zur Stirnwand 4 an dem Stützfortsatz 12 ab und übt kein weiteres Drehmoment mehr auf das Bremsgerät 6 aus. Dadurch wird gewährleistet, daß die gewünschte, zurückgeschwenkte Position des Bremspedales 7 beibehalten wird und das Bremsgerät 6 durch eine weitere Deformation des Vorbaubereiches im Bereich der Vorbaulängsträger 2 und der Federbeinkonsolen 3 zu keiner weiteren Rückverlagerung des Bremsgerätes 6 mehr führt.

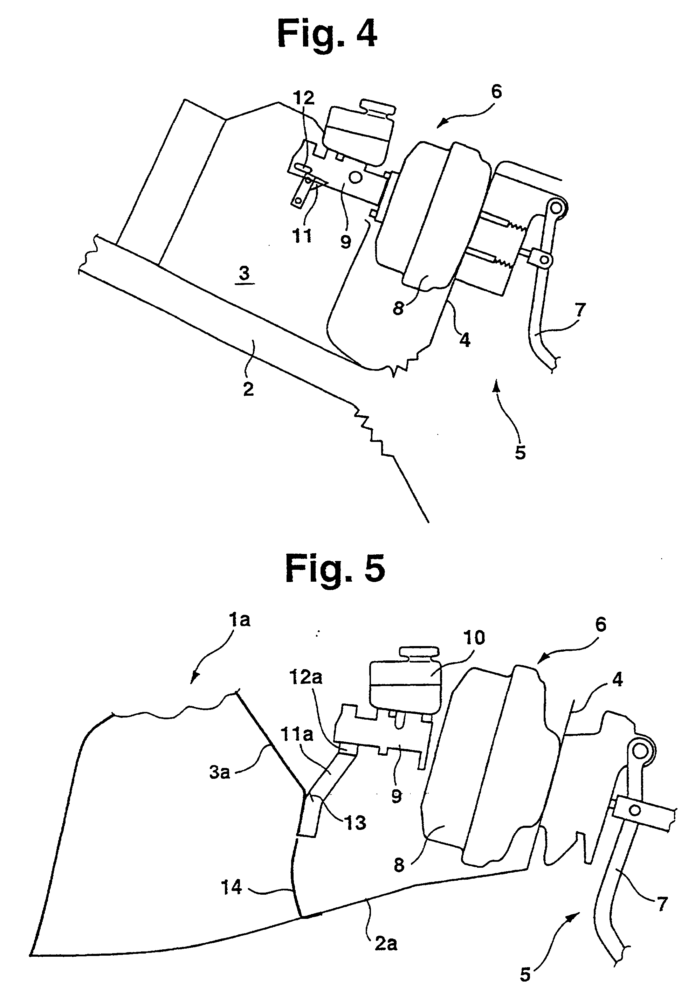

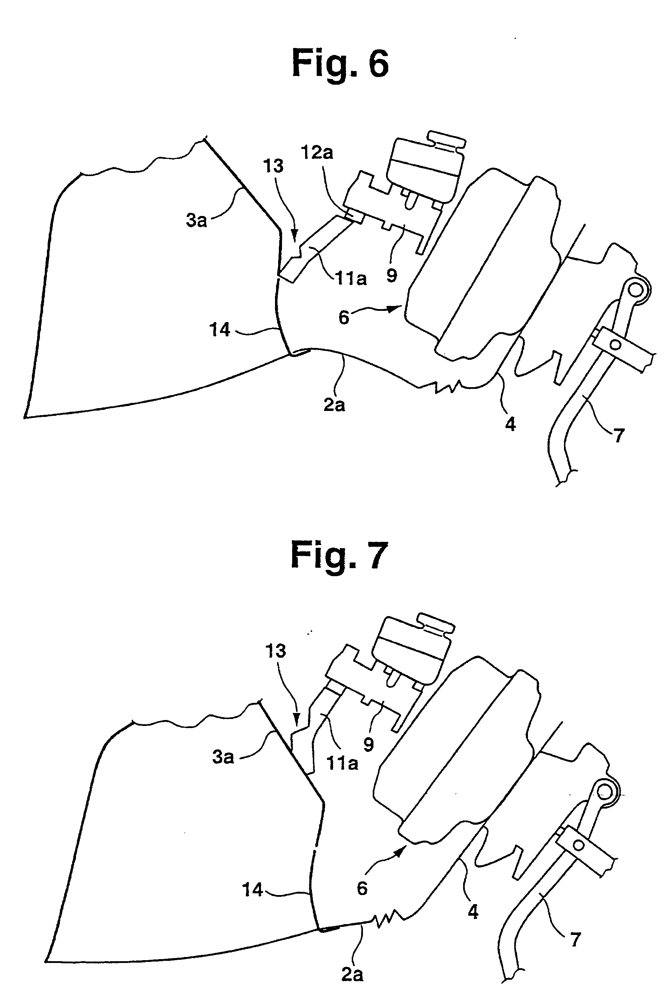

Eine Vorbaustruktur 1a nach den Fig. 5 bis 7 ist ähnlich der Vorbaustruktur 1 nach den Fig. 1 bis 4 gestaltet. Die Vorbaustruktur 1a weist ebenfalls eine Stirnwand 4 auf, an der ein Bremsgerät 6 in zu dem Ausführungsbeispiel nach den Fig. 1 bis 4 entsprechender Weise festgelegt ist. Die Gestaltung des Bremsgerätes 6 sowie die Anordnung eines Bremspedales 7 in einem Fußraum 5 entspricht dem zuvor beschriebenen Ausführungsbeispiel, so daß für eine nähere Erläuterung auf die Beschreibung zu dem vorherigen Ausführungsbeispiel verwiesen wird. Als Zwangsführungsmittel, um das Bremsgerät 6 relativ zur Stirnwand 4 nach oben zu kippen und dadurch eine Vorverlagerung des Bremspedales 7 zu bewirken, ist beim dargestellten Ausführungsbeispiel nach den Fig. 5 bis 7 ein Stützarm 11a vorgesehen, der an einem rückseitigen Stirnbereich einer Federbeinkonsole 3a festgelegt ist. Ein Stützflansch 14 ist fest mit einem Obergurt des Vorbaulängsträgers 2a verbunden. In gleicher Weise kann der Stützflansch auch mit dem Radeinbau verbunden sein. Der Stützarm 11a ist an seinem oberen Stirnende an einem Stützlager 12a des Bremsgerätes 6 befestigt, das als Angriffspunkt für den Stützarm 11a dient und an dem Gehäuse des Hauptbremszylinders 9 festgelegt ist. Die Verbindung zwischen dem Stützlager 12a und dem Stützarm 11a, die insbesondere als Schraubverbindung oder als anders gestaltete mechanische Verbindung ausgeführt ist, bleibt während des gesamten Deformationsvorganges aufgrund eines Fahrzeugaufpralls aufrechterhalten. Dabei kann die Verbindung zwischen Stützlager 12a und Stützarm 11a eine gewisse Nachgiebigkeit aufweisen, wie in Fig. 6 dargestellt ist.

Der Stützarm 11a ist mit einer Sollknickstelle 13 versehen, die derart in den Stützarm 11a, insbesondere als Schlitz, eingebracht ist, daß sie bei beginnender Deformation der Vorbaustruktur 1a und einer daraus resulierenden Druckbelastung des Stützarmes 11a in Fahrzeughochrichtung nach oben auf das Stützlager 12a lediglich auf Druck belastet wird. Bei einer weiteren Deformation gemäß den Fig. 6 und 7 verlagert sich das Stützlager 12a gegenüber der Federbeinkonsole 3a derart, daß der Stützarm 11a auch auf Biegung belastet wird und so die Sollknickstelle 13 sich aufspreizt. Die Sollknickstelle 13 ist derart gestaltet, daß eine weitere Deformation insbesondere in Fahrzeuglängsrichtung nach hinten keine horizontale Bewegungskomponente in Fahrzeuglängsrichtung nach hinten mehr auf das Bremsgerät 6 überträgt, da die durch die Sollknickstelle 13 verursachte Biegung des Stützarmes 11a entsprechende Bewegungskomponenten auffängt. Eine ungewünschte, erneute Rückverlagerung des Bremsgerätes 6 wird dadurch vermieden, so daß das Bremspedal 7 in seiner Position verbleibt, die es durch die zu Beginn erfolgende Kippbewegung des Bremsgerätes 6 innerhalb des Fußraumes 5 eingenommen hatte.

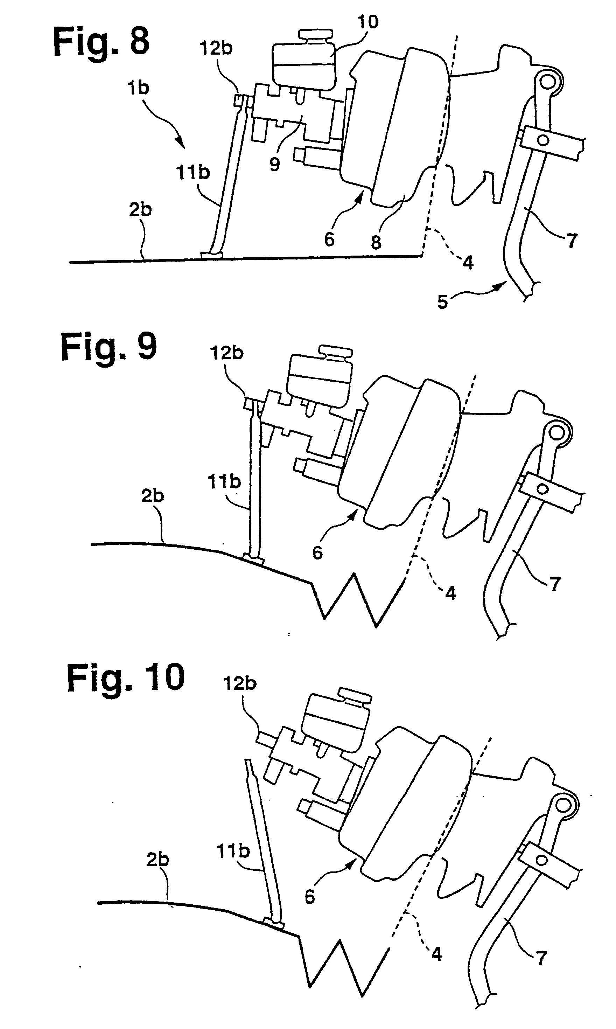

Die Vorbaustruktur 1b nach den Fig. 8 bis 10 weist ebenfalls eine Stirnwand 4 auf, an der in zu den vorangegangenen Ausführungsbeispielen entsprechender Art und Weise ein Bremsgerät 6 festgelegt ist. Entsprechend bau- und funktionsgleiche Teile der Vorbaustruktur 1b sind mit zu den vorhergehenden Ausführungsbeispielen identischen Bezugszeichen versehen, so daß eine nähere Erläuterung hierzu entbehrlich ist. Auch das Bremsgerät 6 wird durch ein Zwangsführungsmittel derart mit einer Deformation der Vorbaustruktur 1b gekoppelt, daß eine Deformation der Vorbaustruktur eine Schwenkbewegung des Bremsgerätes 6 nach oben bewirkt. Als Zwangsführungsmittel ist hierzu ein Stützarm in Form einer Pendelstütze 11b vorgesehen, die mit ihrem unteren Stirnende an einem Obergurt des Vorbaulängsträgers 2b festgelegt ist. Mit ihrem oberen Stirnende ist sie an einem als Angriffspunkt dienenden Koppellager 12b festgelegt, das an einem in Fahrtrichtung gesehen vorderen Stirnende des Gehäuses des Hauptbremszylinders 9 festgelegt ist. Das Koppellager 12b läßt Kipp- und Schiebebewegungen zwischen Bremsgerät 6 und Pendelstütze 11b zu. Bei einer Deformation des Obergurtes des Vorbaulängsträgers 2b gemäß den Fig. 9 und 10 wird aufgrund der Bewegungskomponente der Deformation des Obergurtes in Fahrzeuglängsrichtung die zwischen den Stirnenden starre Pendelstütze 11b aufgerichtet, wodurch das Bremsgerät 6 entsprechend nach oben verschwenkt wird. Demzufolge wird das Bremspedal 7 nach unten und damit aus dem Fußraum 5 herausgeschwenkt. Das Koppellager 12b kann in einfacher Weise als Führungszapfen gestaltet sein, der in einem gabelförmigen Stirnfortsatz der Pendelstütze 11b gehalten ist. Ab einem bestimmten Schwenkwinkel löst sich der Zapfen des Koppellagers 12b aus dem Gabelfortsatz der Pendelstütze 11b (Fig. 10), so daß weitere Deformationen der Vorbaustruktur keine nachteiligen Rückverlagerungen des Bremsgerätes 6 mehr bewirken können.

Diese Schwenkbewegung des Bremsgerätes 6 wird verstärkt, falls der Obergurt des Längsträgers 2b zusätzlich eine Deformation in Fahrzeughochrichtung erfährt.

## Patentansprüche

1. Vorbaustruktur (1) für ein Kraftfahrzeug mit einer einen Fahrgastraum von einem Vorbauraum trennenden Stirnwand (4), an der ein Bremsgerät (6) mit einem Hauptbremszylinder (9) festgelegt ist, das mit einem Bremspedal (7) zusammenwirkt, wobei das Bremspedal (7) in einen Fußraum (5) des Fahrgastraumes hineinragt, sowie mit vorbauseitigen Rohbaukarosserieteilen und mit Mitteln zur Verschwenkung des Bremsgerätes (6) mit dem Bremspedal (7) bei einem Fahrzeugaufprall,
**dadurch gekennzeichnet,**
**dass** einem Angriffspunkt des Hauptbremezylinders (9), der im in Fahrtrichtung vorderen Stirnbereich des Hauptbremszylinders (9) liegt, wenigstens ein mechanisches Zwangsführungsmittel (11,11a,11b) zugeordnet ist, das an wenigstens einem Rohbaukarosserieteil festgelegt ist und das bei einem Fahrzeugaufprall wenigstens mit einer Bewegungskomponente in Fahrzeughochrichtung von unten nach oben an den Angriffspunkt im Stirnbereich des Bremsgerätes angreift, die eine Kippbewegung des Bremsgerätes (6) erzeugt, wobei das zwangs führungsmittel eine Stützkonsole (11) oder ein Stützarm (11a,11b) ist.

2. Vorbaustruktur nach Anspruch 1,
**dadurch gekennzeichnet, daß**
das wenigstens eine Zwangsführungsmittel (11, 11a, 11b) dem Stirnbereich (9) des Bremsgerätes (6) derart zugeordnet ist, daß es bei einer Rückverlagerung in Fahrzeuglängsrichtung während der Aufpralldeformation vom Bremsgerät (6) entkoppelt wird.

3. Vorbaustruktur nach Anspruch 1,
**dadurch gekennzeichnet, daß**
als Zwangsführungsmittel an dem Rohbaukarosserieteil (2, 3) ein Stützarm (11b) angeordnet ist, der während einer Vorbaudeformation wenigstens zeitweise formschlüssig gegen einen Angriffspunkt (12b) des Bremsgerätes (6) drückt.

4. Vorbaustruktur nach Anspruch 3,
**dadurch gekennzeichnet, daß**
der Angriffspunkt durch ein koppellager (12b) an dem Gehäuse des Hauptbremszylinders (9) gebildet ist, das derart an dem Gehäuse positioniert ist, daß der Stützarm (11b) bei einer Bewegungskomponente der Vorbaudeformation in Fahrzeuglängsrichtung nach hinten an dem koppellager (12b) ohne Aufbringung eines entsprechenden Drehmomentes auf das Bremsgerät (6) abgleitet.

5. Vorbaustruktur nach Anspruch 1,
**dadurch gekennzeichnet, daß**
der Stützarm (11a) mit einer ein Drehmoment auf das Bremsgerät (6) entgegen der erzeugten Kippbewegung verhindernden Sollknickstelle (13) versehen ist.

6. Vorbaustruktur nach Anspruch 1,
**dadurch gekennzeichnet, daß**
der Stützarm (11b) an dem Angriffspunkt mittels eines Abkopplungsmechanismus (12b) angelenkt ist, der ein Lösen des Stützarmes (11b) von dem Angriffspunkt bei einem beginnenden Drehmoment auf das Bremsgerät (6) zurück in Richtung des Fußraumes (5) bewirkt.

## Claims

1. Front end structure (1) for a motor vehicle with an end wall (4) separating a passenger compartment from a front end compartment, to which end wall a brake device (6) with a main brake cylinder (9) is fixed, the brake device cooperating with a brake pedal (7), the brake pedal (7) projecting into a footwell (5) of the passenger compartment, and with body shell parts on the front end side and with means for pivoting the brake device (6) with the brake pedal (7) in the event of a vehicle impact, **characterised in that** at least one mechanical forced guidance means (11, 11a, 11b) is associated with an engagement point of the main brake cylinder (9) located in the end region of the main brake cylinder (9) leading in the direction of travel, the forced guidance means being fixed to at least one body shell part and engaging at least with one movement component upwardly in the height direction of the vehicle on the engagement point in the end region of the brake device in the event of a vehicle impact, the movement component generating a tilting movement of the brake device (6), the forced guidance means being a supporting console (11) or a supporting arm (11a, 11b).

2. Front end structure according to claim 1, **characterised in that** the at least one forced guidance means (11, 11a, 11b) is associated with the end region (9) of the brake device (6), in such a way that it is decoupled from the brake device (6) in the event of a backward displacement in the longitudinal direction of the vehicle during the impact deformation.

3. Front end structure according to claim 1, **characterised in that** a supporting arm (11b) is arranged on the body shell part (2, 3) as the forced guidance means, the supporting arm (11b) pressing at least temporarily in an interlocking manner against an engagement point (12b) of the brake device (6) during a front end deformation.

4. Front end structure according to claim 3, **characterised in that** the engagement point is formed by a coupling bearing (12b) on the housing of the main brake cylinder (9) which is positioned on the housing in such a way that with a movement component of the front end deformation the supporting arm (11b) slides down backwards in the longitudinal direction of the vehicle on the coupling bearing (12b), without application of a corresponding torque on the brake device (6).

5. Front end structure according to claim 1, **characterised in that** the supporting arm (11a) is provided with a rupture joint (13) preventing a torque on the brake device (6) counter to the tilting movement generated.

6. Front end structure according to claim 1, **characterised in that** the supporting arm (11b) is articulated to the engagement point by means of a decoupling mechanism (12b) which brings about a release of the supporting arm (11b) from the engagement point in the event of a torque starting on the brake device (6) back in the direction of the footwell (5).

## Revendications

1. Structure de partie avant (1) pour un véhicule automobile avec un tablier (4) séparant un habitacle d'un espace de partie avant, sur lequel est fixé un appareil de freinage (6) avec un maître-cylindre de frein (9), qui coopère avec une pédale de frein (7), la pédale de frein dépassant dans un espace pour les jambes (5) de l'habitacle, et avec des parties de coque côté partie avant et avec des moyens pour le basculement de l'appareil de freinage (6) avec la pédale de frein (7) lors d'une collision de véhicule, **caractérisée en ce qu'**à un point d'application du maître-cylindre de frein (9), qui est disposé dans la zone frontale, avant dans le sens de marche, du maître-cylindre de frein (9) est attribué au moins un moyen de guidage forcé (11, 11a, 11b), mécanique, qui est fixé sur au moins une partie de coque et qui, lors d'une collision de véhicule, s'applique au moins avec une composante de déplacement dans le sens vertical du véhicule du bas vers le haut au point d'application dans la zone frontale de l'appareil de freinage, laquelle composante génère un mouvement de basculement de l'appareil de freinage (6), le moyen de guidage forcé étant une console d'appui (11) ou un bras d'appui (11a, 11b).

2. Structure de partie avant selon la revendication 1, **caractérisée en ce que** au moins un moyen de guidage forcé (11, 11a, 11b) est attribué à la zone frontale (9) de l'appareil de freinage (6) de telle sorte que, lors d'un déplacement arrière dans le sens longitudinal du véhicule, il est dissocié de l'appareil de freinage (6) pendant la déformation due à un impact.

3. Structure de partie avant selon la revendication 1, **caractérisée en ce qu'**un bras d'appui (11b) est disposé comme moyen de guidage forcé sur la partie de coque (2, 3), lequel bras appuie pendant une déformation de partie avant au moins temporairement et par conjugaison de forme contre un point d'application (12) de l'appareil de freinage (6).

4. Structure de partie avant selon la revendication 3, **caractérisée en ce que** le point d'application est formé par un palier de couplage (12b) sur le boîtier du maître-cylindre de frein (9), qui est positionné sur le boîtier de telle sorte que le bras d'appui (11b) glisse avec une composante de mouvement de la déformation du corps avant dans le sens longitudinal du véhicule vers l'arrière sur le palier de couplage (12b) sans appliquer un couple approprié sur l'appareil de freinage (6).

5. Structure de partie avant selon la revendication 1, **caractérisée en ce que** le bras d'appui (11a) est pourvu d'un point de pliage théorique (13) qui empêche l'application d'un couple sur l'appareil de freinage (6) dans le sens contraire au mouvement de basculement généré.

6. Structure de partie avant selon la revendication 1, **caractérisée en ce que** le bras d'appui (11b) est articulé sur le point d'application au moyen d'un mécanisme de découplage (12b), qui entraîne un détachement du bras d'appui (11b) du point d'application dans le cas d'un début de couple sur l'appareil de freinage (6) en arrière en direction de l'espace pour les jambes (5).
